(19) **Europäisches Patentamt**

**European Patent Office**

**Office européen des brevets**

(11) **EP 1 431 510 B1**

(12) **EUROPEAN PATENT SPECIFICATION**

(45) Date of publication and mention
of the grant of the patent:
**12.04.2006 Bulletin 2006/15**

(51) Int Cl.:
*E21B 7/06* $^{(2006.01)}$     *E21B 47/022* $^{(2006.01)}$
*G01C 19/38* $^{(2006.01)}$

(21) Application number: **04004828.2**

(22) Date of filing: **29.08.2001**

(54) **Device for rotatably positioning and locking a drive shaft at one plurality of angular positions**

Vorrichtung zum rotierbaren Positionieren und Blockieren einer Antriebswelle auf verschiedenen Winkeln

Dispositif de positionnement rotatif et de blockage d'un arbre d'entraînement à une pluralité d'angles

(84) Designated Contracting States:
**BE DE FR IT NL**

(30) Priority: **29.08.2000 US 228578 P**
**26.09.2000 US 669759**

(43) Date of publication of application:
**23.06.2004 Bulletin 2004/26**

(62) Document number(s) of the earlier application(s) in accordance with Art. 76 EPC:
**01307344.0 / 1 184 539**

(73) Proprietor: **BAKER HUGHES INCORPORATED**
**Houston**
**Texas 77210-4740 (US)**

(72) Inventors:
- **Kahn, John B.**
  **Spring**
  **Texas 77388 (US)**
- **Estes, Robert A.**
  **Tomball**
  **Texas 77375 (US)**

(74) Representative: **Jeffrey, Philip Michael**
**Frank B. Dehn & Co.**
**179 Queen Victoria Street**
**London EC4V 4EL (GB)**

(56) References cited:
**EP-A- 0 499 726**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This invention relates generally to bottom hole assemblies for drilling oilfield wellbores and more particularly to the use of gyroscopic and other sensors to determine wellbore direction during the drilling of the wellbores and to the correction of data from such sensors.

To obtain hydrocarbons such as oil and gas, wellbores (also referred to as the boreholes) are drilled by rotating a drill bit attached at the end of a drilling assembly generally referred to as the "bottom hole assembly" or the "drilling assembly." A large portion of the current drilling activity involves drilling highly deviated and substantially horizontal wellbores to increase the hydrocarbon production and/or to withdraw additional hydrocarbons from the earth's formations. The wellbore path of such wells is carefully planned prior to drilling such wellbores utilizing seismic maps of the earth's subsurface and well data from previously drilled wellbores in the associated oil fields. Due to the very high cost of drilling such wellbores and the need to precisely place such wellbores in the reservoirs, it is essential to continually determine the position and direction of the drilling assembly and thus the drill bit during drilling of the wellbores. Such information is utilized, among other things, to monitor and adjust the drilling direction of the wellbores.

In the commonly used drilling assemblies, the directional package commonly includes a set of accelerometers and a set of magnetometers, which respectively measure the earth's gravity and magnetic field. The drilling assembly is held stationary during the taking of the measurements from the accelerometers and the magnetometers. The toolface and the inclination angle are determined from the accelerometer measurements. The azimuth is then determined from the magnetometer measurements in conjunction with the tool face and inclination angle.

The earth's magnetic field varies from day to day, which causes corresponding changes in the magnetic azimuth. The varying magnetic azimuth compromises the accuracy of the position measurements when magnetometers are used. Additionally, it is not feasible to measure the earth's magnetic field in the presence of ferrous materials, such as casing and drill pipe. Gyroscopes measure the rate of the earth's rotation, which does not change with time nor are the gyroscopes adversely affected by the presence of ferrous materials. Thus, in the presence of ferrous materials the gyroscopic measurements can provide more accurate azimuth measurements than the magnetometer measurements.

United States Patent 5,432,699 discloses a method and apparatus measuring motion signals of gyroscopes in downhole instruments used to determine the heading of a borehole. Accelerometer and magnetometer data along three orthogonal axes of a measurement sub are used to obtain unit gravitational and magnetic vectors. The gyroscope measurements are used to correct the magnetic and gravity measurements made by the magnetometer and the accelerometer respectively. The calculations performed in the correction process by this, and other prior art optimization schemes based upon least squares methods, are valid when the measurements are corrupted by random additive noise. As would be known to those versed in the art, in the presence of systematic measurement errors, such least-squares optimization methods are unreliable.

Commercially available gyroscopes contain systematic errors or biases that can severely deteriorate accuracy of a gyroscope's measurements and thus the azimuth. Gyroscopes have been utilized in wireline survey applications but have not found commercial acceptance in the measurement-while-drilling tools such as bottomhole assemblies.

In wireline applications, the survey tool is conveyed into the wellbore after the wellbore has been drilled, in contrast to the MWD tools wherein the measurements are made during the drilling of the wellbores. Wireline methods are not practical in determining the drilling assembly position and direction during the drilling of the wellbores. In wireline applications, the gyroscopes are used either in a continuous mode or at discrete survey intervals. Wireline survey methods often make it unnecessary to employ techniques to compensate for the present-value of the gyroscope biases. In wireline applications, the gyroscope can be powered-up at the surface and allowed to stabilize (thermally and dynamically) for a relatively long time period. Typically a warm-up period often (10) minutes or more is taken. The power to the gyroscope is continuously applied from the beginning at the surface, through the actual wellbore survey and through the final check of the survey tool at the surface at the end of the survey. Therefore, reference alignments can be made at the surface prior to commencing the wellbore survey to adjust or verify the alignment accuracy of the north-seeking gyroscope. The initial independent reference can then be used at the end of the wireline survey. Any bias in the gyroscope in a wireline tool can be measured at the surface by taking the difference in the alignments at the beginning and the end of the survey runs. Furthermore, the wireline tool carrying the gyroscope can easily be rotated at the surface to several different toolface (roll angle) positions to determine the bias present on either of the transverse gyroscopes (i.e., along the x and y axis of the tool) when the tool is at the surface. This bias can be used to verify the accuracy or to correct the gyroscope measurements.

In the MWD environment, the above-noted advantages of the wireline systems are not present. The MWD surveys are usually taken during drill pipe connection times during the drilling of the wellbore, which intervals are relatively short-generally one or two minutes. Power in the MWD tools is generated downhole and/or provided by batteries. To conserve the power, it is desirable to switch off the gyroscopes when not in use because the gyroscopes consume considerable power. For MWD tools utilizing turbine-alternator, the power is generated by flow of the drilling fluid ("mud") which is interrupted at each pipe connection. Even if the power could be applied continuously, the difference in the bias measured at the surface prior to the drilling and post drilling is not considered an accurate measure due to the very long time between drilling assembly trips, which are typically between 30 and 300 hours.

Bias stability from turn-on to turn-on is a major error component for the currently available tactical grade gyroscopes. Removing the bias by rotating the gyroscopes about a vertical axis (long axis) has been utilized in non-drilling applications. Toolface orientation positioning of a bottomhole assembly during the drilling of the wellbores often is not a control variable that can be changed as desired. The depth, hole angle, tool deviation, and borehole condition often limit the ability to acquire sensor data at various roll angles of the bottomhole assembly in the wellbore. Thus, it is important to ensure that gyroscopes used for MWD measurements are bias compensated in real time internally prior to taking measurements at each interval. This can be achieved by determining and removing the biases in the gyroscope in the transverse plane using an internal indexing mechanism in the process of taking measurements downhole at each drilling interval. Biases may also be present in the other measurements, i.e., those made by magnetometers and accelerometers, for the same reasons as discussed above with reference to gyroscopes. It is desirable to remove these biases as well in order to obtain accurate survey information.

International Patent Application WO-A-9928594 to *Estes et al*, discloses a method for estimation and removal of bias in a downhole MWD device. The downhole assembly disclosed therein includes at least one gyroscope that is rotatably mounted in a tool housing to provide signals relating to the earth's rotation. A device in the tool can rotate the gyroscope within the tool at any desired degree.

The bottomhole assembly of *Estes* experiences severe rotational dynamics during the drilling process. It is desirable to be able to internally rotate the bottomhole sensors for bias correction measurements and then to mechanically lock them from rotational movement between correction measurements when the tool is in motion while the well is being drilled. During the period of tool motion, accelerometer and magnetometer measurements could desirably be made to provide continuous monitoring of the orientation of the bottom-hole assembly (BHA). Conventional devices utilize one motor to rotationally drive an instrument package and a separate motor or a solenoid to actuate a locking mechanism. This arrangement requires significant space and power in the downhole package. It would be desirable to have an apparatus that requires less space and power and makes it possible to determine the bias when the BHA is stationary

It would also be desirable to have a gyro-MWD module that is retrievable and can be used in conjunction with a drilling liner system. With such an arrangement, the gyro-MWD module would not be subjected to the severe downhole conditions for an extended period of time.

According to the present invention there is provided a device for rotatably portioning and locking a drive shaft in a measurement-while-drilling (MWD) downhole assembly as claimed in claim 1.

An internal apparatus for rotationally positioning and locking a downhole instrument package to facilitate more accurate directional measurements in a measurement-while-drilling (MWD) downhole assembly is provided. A single motor is used to both rotate the instrument package for bias measurements and to axially drive a locking pin into a locking disk to prevent rotation when bias measurements are not being taken when the wellbore is being drilled. The use of a single motor drive saves both space and power, both commodities being at a premium in downhole applications. A positive stop to prevent damage to electrical wires during rotation is further provided. In addition, an electrical circuit is completed to signal when the device is in the locked position. Measurements with the accelerometer, magnetometer and gyroscope may be made while the BHA is in motion, and using a bias determined prior to locking the instrument package, an updated position and orientation of the BHA may be determined.

A method of indexing a locking disk to ensure that the locking pin stabs into the center of a locking hole is further disclosed. The method comprises slipping a drive shaft through a slip clutch a fixed amount to ensure proper hole alignment when the locking pin is returned to the locked position.

With the use of the locking motor, it is possible to make the indexing measurements at a single depth while drilling operations are temporarily halted. Once the biases have been determined, the housing assembly is locked in position and drilling operations resumed. Measurements made during continuing drilling operations may then be corrected using the prior determined bias. The locking mechanism reduces the likelihood of damage to the sensitive instruments during the continuing drilling operations.

A measurement-while-drilling (MWD) downhole assembly for use in drilling boreholes may utilize gyroscopes and accelerometers for determining the borehole inclination and azimuth during the drilling of the borehole. The downhole assembly may include at least one gyroscope that is rotatably mounted in a tool housing to provide signals relating to the earth's rotation. A device in the tool can rotate the gyroscope within the tool at any desired degree. A processor in the tool can combine measurements from the gyroscope taken at a number of rotational positions at the same depth to determine the systematic bias in the gyroscope before further processing of the signals. The tool can include magnetometers and accelerometers so that biases in measurements made by these instruments can also be determined. Additionally, using a plurality of axially spaced apart magnetometers, the magnetic gradient may also be determined, making it possible to correct for local magnetic sources. The processor can combine measurements taken from accelerometers in the MWD tool to provide gravity measurements from which the toolface and inclination are determined. The unbiased gyroscopic measurements are used in conjunction with the toolface and inclination measurements to determine the azimuth and true north toolface.

A method of eliminating a systematic bias present in a survey instrument deployed in a measurement-while-drilling tool during the drilling of a borehole is also disclosed. The method comprises drilling the borehole utilizing the MWD tool to a depth, followed by rotating the instrument through a plurality of angles while taking measurements with the instrument at each position, and estimating the bias from these multiple measurements.

The drilling may be performed by a drilling liner and the gyro-MWD device is retrievably mounted in the drilling liner to make determinations of the orientation of the borehole.

The gyro-MWD device can be used to control the orientation of an injection wellbore used in secondary recovery operations for injecting a fluid such as steam, $CO_2$, water or a polymer in proximity to a perforated cased production wellbore. Due to the presence of casing, magnetometers cannot be used to maintain the desired relative position of the injection wellbore and the production wellbore. With the gyro-MWD device, a positional accuracy of three meters or less may be maintained while drilling the injection wellbore.

Preferred embodiments of the present invention will now be described by way of example only and with reference to the accompanying drawings, in which:

**Figure 1** shows a schematic diagram of a drilling system that employs the apparatus of the preferred embodiment in a measurement-while-drilling assembly;

**Figure 2A** shows a schematic diagram of a portion of the bottomhole assembly with a set of gyroscopes and a corresponding set of accelerometers ;

**Figure 2B** shows a schematic diagram showing the use of a second two-axis gyroscope in the bottomhole assembly shown in **Figure 2A;**

**Figures 2C** and **2D** are graphs showing sinusoidal output of a two-axis gyroscope;

**Figure 2E** shows an indexing method for use in bias determination;

**Figure 3** shows a functional block diagram of the major downhole elements of a bottomhole assembly;

**Figure 4** shows a sensor section using two motors to drive two gyros, one of which is coupled to the magnetometers and the accelerometers;

**Figure 5** shows another sensor section using a single motor to drive two gyros, one of which is coupled to the magnetometers and the accelerometers;

**Figure 6A** shows an embodiment of the invention showing a portion of the sensor system with a motor drive and locking apparatus in the locked position;

**Figure 6B** shows the embodiment of Figure 6A with the apparatus in the unlocked position;

**Figure 6C** shows a sectional view of the notched shoulder/stop pin arrangement of **Figure 6A**;

**Figure 6D** shows a sectional view of the locking disk/locking pin arrangement of **Figure 6A**;

**Figure 6E** shows a top view of the lead screw/trolley arrangement as shown in **Figure 6A**.

**Figure 7A** shows an alternate embodiment of the locking disk and locking pin;

**Figure 7B** shows one embodiment of a telescoping locking pin;

**Figure 7C** shows a second embodiment of a telescoping locking pin;

**Figure 7D** shows an embodiment of the locking disk and locking pin adapted for frictional engagement;

**Figure 8** shows the schematic arrangements of the Gyro-MWD device when used with a drilling liner; and

**Figure 9** shows use of the invention to drill a second borehole in accurate and close proximity to a cased production borehole.

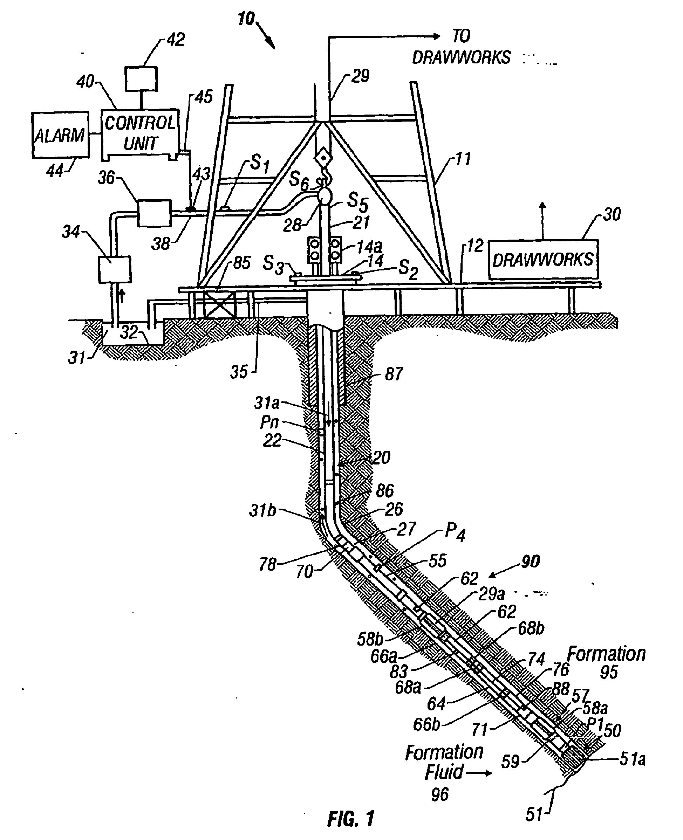

**Figure 1** shows a schematic diagram of a drilling system **10** having a bottom hole assembly (BHA) or drilling assembly **90** that includes gyroscope(s). The BHA **90** is conveyed in a borehole **26**. The drilling system **10** includes a conventional derrick **11** erected on a floor **12** which supports a rotary table **14** that is rotated by a prime mover such as an electric motor (not shown) at a desired rotational speed. The drill string **20** includes a tubing (drill pipe or coiled-tubing) **22** extending downward from the surface into the borehole **26**. A drill bit **50,** attached to the drill string **20** end, disintegrates the geological formations when it is rotated to drill the borehole **26**. The drill string **20** is coupled to a drawworks **30** via a kelly joint **21,** swivel **28** and line **29** through a pulley (not shown). Drawworks **30** is operated to control the weight on bit ("WOB"), which is an important parameter that affects the rate of penetration ("ROP"). A tubing injector **14a** and a reel (not shown) are used as instead of the rotary table **14** to inject the BHA into the wellbore when a coiled-tubing is used as the conveying member **22**. The operations of the drawworks **30** and the tubing injector **14a** are known in the art and are thus not described in detail herein.

During drilling, a suitable drilling fluid **31** from a mud pit (source) **32** is circulated under pressure through the drill string **20** by a mud pump **34**. The drilling fluid passes from the mud pump **34** into the drill string **20** via a desurger **36** and the fluid line **38**. The drilling fluid **31** discharges at the borehole bottom **51** through openings in the drill bit **50.** The drilling fluid **31** circulates uphole though the annular space **27** between the drill string **20** and the borehole **26** and returns to the mud pit **32** via a return line **35** and drill cutting screen **85** that removes the drill cuttings 86 from the returning drilling fluid **31b**. A sensor $S_1$ in line **38** provides information about the fluid flow rate. A surface torque sensor $S_2$ and a sensor $S_3$ associated with the drill string **20** respectively provide information about the torque and the rotational speed of the drill string **20**. Tubing injection speed is determined from the sensor $S_5$, while the sensor $S_6$ provides the hook load of the drill string **20**.

In some applications the drill bit **50** is rotated by only rotating the drill pipe **22.** However, in many other applications, a downhole motor **55** (mud motor) is disposed in the drilling assembly **90** to rotate the drill bit **50** and the drill pipe **22** is rotated usually to supplement the rotational power, if required, and to effect changes in the drilling direction. In either case, the ROP for a given BHA largely depends on the WOB or the thrust force on the drill bit **50** and its rotational speed.

The mud motor **55** is coupled to the drill bit **50** via a drive disposed in a bearing assembly **57.** The mud motor **55** rotates the drill bit **50** when the drilling fluid **31** passes through the mud motor **55** under pressure. The bearing assembly **57** supports the radial and axial forces of the drill bit **50**, the downthrust of the mud motor **55** and the reactive upward loading from the applied weight on bit. A lower stabilizer 58a coupled to the bearing assembly 57 acts as a centralizer for the lowermost portion of the drill string **20.**

A surface control unit or processor **40** receives signals from the downhole sensors and devices via a sensor **43** placed in the fluid line **38** and signals from sensors $S_1$-$S_6$ and other sensors used in the system **10** and processes such signals according to programmed instructions provided to the surface control unit **40**. The surface control unit **40** displays desired drilling parameters and other information on a display/monitor **42** that is utilized by an operator to control the drilling operations. The surface control unit **40** contains a computer, memory for storing data, recorder for recording data and other peripherals. The surface control unit **40** also includes a simulation model and processes data according to programmed instructions. The control unit **40** is preferably adapted to activate alarms **44** when certain unsafe or undesirable operating conditions occur.

The BHA may also contain formation evaluation sensors or devices for determining resistivity, density and porosity of the formations surrounding the BHA A gamma ray device for measuring the gamma ray intensity and other nuclear and non-nuclear devices used as measurement-while-drilling devices are suitably included in the BHA **90**. As an example, **FIG. 1** shows a resistivity measuring device **64.** It provides signals from which resistivity of the formation near or in front of the drill bit **50** is determined. The resistivity device **64** has transmitting antennae **66a** and **66b** spaced from the receiving antennae **68a** and **68b**. In operation, the transmitted electromagnetic waves are perturbed as they propagate through the formation surrounding the resistivity device **64**. The receiving antennae **68a** and **68b** detect the perturbed waves. Formation resistivity is derived from the phase and amplitude of the detected signals. The detected signals are processed by a downhole computer **70** to determine the resistivity and dielectric values.

An inclinometer **74** and a gamma ray device **76** are suitably placed along the resistivity measuring device **64** for respectively determining the inclination of the portion of the drill string near the drill bit **50** and the formation gamma ray intensity. Any suitable inclinometer and gamma ray device, however, may be utilized. In addition, position sensors, such as accelerometers, magnetometers or a gyroscopic devices may be disposed in the BHA to determine the drill string azimuth, true coordinates and direction in the wellbore **26**. Such devices are known in the art and are not described in detail herein.

In the above-described configuration, the mud motor **55** transfers power to the drill bit **50** via one or more hollow shafts that run through the resistivity measuring device **64**. The hollow shaft enables the drilling fluid to pass from the mud motor **55** to the drill bit **50**. In an alternate drill string **20,** the mud motor **55** may be coupled below resistivity measuring device **64** or at any other suitable place. The above described resistivity device, gamma ray device and the inclinometer are preferably placed in a common housing that may be coupled to the motor. The devices for measuring formation porosity, permeability and density (collectively designated by numeral **78)** are preferably placed above the mud motor **55.** Such devices are known in the art and are thus not described in any detail.

As noted earlier, a large portion of the current drilling systems, especially for drilling highly deviated and horizontal wellbores, utilize coiled-tubing for conveying the drilling assembly downhole. In such application a thruster **71** is deployed in the drill string **90** to provide the required force on the drill bit. For the purpose of this invention, the term weight on bit is used to denote the force on the bit applied to the drill bit during the drilling operation, whether applied by adjusting the weight of the drill string or by thrusters. Also, when coiled-tubing is utilized the tubing is not rotated by a rotary table, instead it is injected into the wellbore by a suitable injector **14a** while the downhole motor **55** rotates the drill bit **50.**

A number of sensors are also placed in the various individual devices in the drilling assembly. For example, a variety of sensors are placed in the mud motor power section, bearing assembly, drill shaft, tubing and drill bit to determine the condition of such elements during drilling and to determine the borehole parameters. The preferred manner of deploying certain sensors in drill string **90** will now be described. The actual BHA utilized for a particular application may contain some or all of the above described sensors. Any such BHA could contain one or more gyroscopes and a set of accelerometers (collectively represented herein by numeral **88**) at a suitable location in the BHA **90**.

**Figure 2A** is a schematic diagram showing a sensor section **200** containing a gyroscope **202** and a set of three accelerometers **204x, 204y** and **204z** disposed at a suitable location in the bottomhole assembly (**90** in **Fig. 1**). The gyroscopes **202** may be a single axis gyroscope or a two-axis gyroscope. In vertical and low inclination wellbores, an x-axis and a y-axis gyroscope are deemed sufficient for determining the azimuth and toolface with respect to the true north. The configuration shown in **Figure 2A** utilizes a single two-axis (x-axis and y-axis) gyroscope that provides outputs corresponding to the earth's rate of rotation in the two axis (x-axis and y-axis) perpendicular to the borehole axis or the bottomhole assembly longitudinal axis, referred to herein as the z-axis. The sensor **202** thus measures the earth's rotation component in the x-axis and y-axis. The accelerometers **204x, 204y** and **204z** measure the earth's gravity components respectively along the x, y, and z axes of the bottomhole assembly **90**.

The gyroscope **202** and accelerometers **204x-204z** are disposed in a rotating chassis **210** that rotates about the radial bearings **212a-212b** in a fixed or non-rotating housing **214**. An indexing drive motor **216** coupled to the rotating chassis **210** via a shaft **218** can rotate the chassis **210** in the bottomhole assembly **90** about the z-axis, thus rotating the gyroscopes **202** from one mechanical position to another position by any desired rotational angle. A stepper motor is preferred as the indexing drive motor **216** because stepper motors are precision devices and provide positive feedback about the amount of rotation. Any other mechanism, whether electrically-operated, hydraulically-operated or by any other desired manner, may be utilized to rotate the gyroscopes within the bottomhole assembly **90.** The gyroscope **202** may be rotated from an initial arbitrary position to a mechanical stop (not shown) in the tool or between two mechanical stops or from an initial peak measurement to a second position as described later. The rotational angle corresponding to a particular axis is selectable.

Although **Figure 2A** shows a single two axis gyroscope, a separate gyroscope may be utilized for each axis. A wiring harness **226** provides power to the gyroscope **202** and accelerometers **204x, 204y, 204z.** The wiring harness **226** transmits signals from the gyroscope and accelerometers to the processor in the bottomhole assembly **90.** Similarly, a suitable wiring harness **220** provides power and signal linkage to the stepper motor **216** and additional downhole equipment. A spring loaded torque limiter **240** may be used to prevent inertial loading caused by drillstring rotation from damaging the gearbox of the stepper motor **216**.

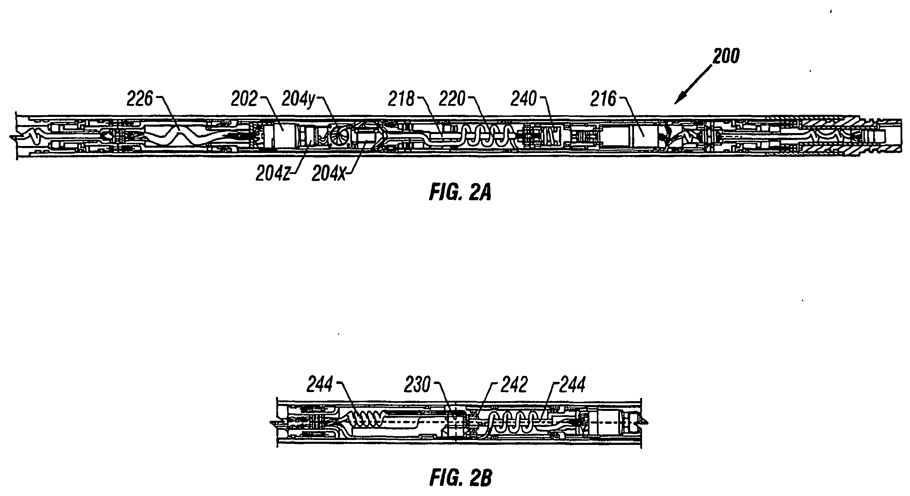

In addition a second two-axis (x-axis and z-axis) gyroscope **230** may be rotatably mounted in the bottomhole assembly **90** in a rotating chassis or in any other manner to measure the rate of rotation in the z-axis and the x-axis, as shown in **Figure 2B.** The sensor **230** could be rotated about the y-axis using a bevel gear **242** and a shaft linkage **244** to the rotating chassis **210**, thus eliminating the need for an additional motor. The wiring harness **244** for the y-axis gyro **230** must be spooled around the gyro to accommodate the space available in a small diameter housing.

As noted above, an MWD gyroscope requires optimization and/or compensation for several parameters in order to provide the required performance from typical gyroscopic sensors currently available.

One of the error parameters that in some cases is too large for adequate accuracy performance in a typical adaptation of an MWD Gyroscope is the bias on the gyroscope's output. Some gyroscopes have small error values for the "bias random walk" term, and relatively stable bias values after an initial warm-up period, but have a large instability in the bias seen from turn-on to turn-on. The bias and bias random walk largely determine the accuracy of a gyroscope sensor used in the gyrocompass (North-Seeking) mode of operation. An apparatus and a method to correct for the bias error seen after power is applied during drilling is desirable.

Compensation for the systematic bias error in a gyroscope in an MWD tool can be accomplished by indexing the gyroscope to two positions **180** degrees apart and by using data from these positions to determine the bias. Adding the two measurements results in a cancellation of the positive-going and negative-going signals and a doubling of the bias error. If all other parameters are compensated by a calibration process done prior to the operation of the bottomhole assembly the remaining error in the gyroscope (the bias) is removed after calculation as follows:

$$\text{Bias} = \tfrac{1}{2} \left( (\text{"zero" reading}) + (\text{"180" reading}) \right) \qquad (1)$$

Mechanical stops can be used to rotate the gyroscope to an arbitrary "zero" position, and then to the "180" position. For a single axis gyroscope, this technique can determine the bias, which is then used to compensate subsequent measurements from the gyroscope, in addition to the previously determined calibration parameters. For a 2-axis gyroscope, the technique of indexing from the "zero" position to the "180" position can provide a measurement of the bias for each of the two (X and Y) transverse axis gyroscopes. Alternatively, a stepper motor or a drive motor with an angular resolver could be used to index 180 degrees from an arbitrary initial position on the rotating axis.

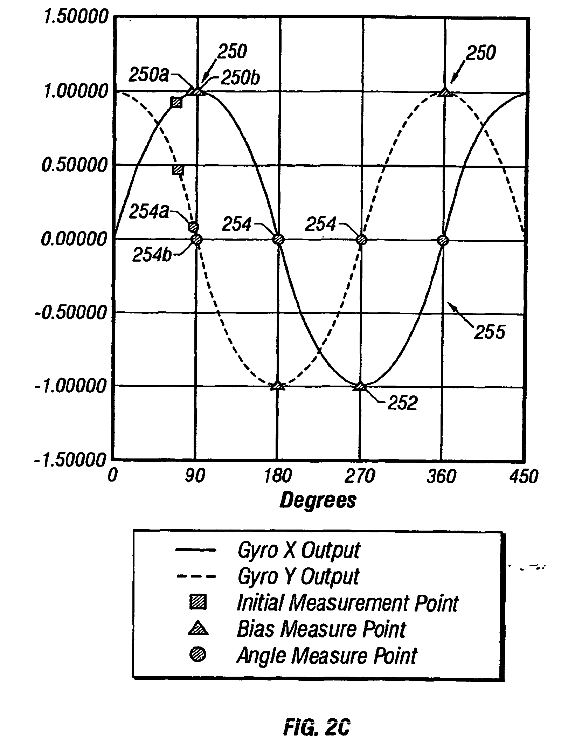

This technique is illustrated in the graph shown in **Figure 2C** by the small square symbols designated "Initial Measurement Point". This position is shown at **62** degrees on the horizontal axis of the chart, corresponding to a relative roll angle (or toolface angle) **of 62** degrees. A second measurement could then be obtained at **62 + 180,** or **242** degrees, and the bias computed for Gyroscope X or Gyroscope **Y** or both from the measurements at these two positions.

But this technique of taking the first measurement at an arbitrary roll angle position on the graph could result in a gyroscope output occurring near null (zero on the vertical axis.) In such a case, the output of the gyroscope has a steep slope, and is very sensitive to variations in the position along the horizontal axis. To get good results, the indexing from the "zero" point to the "180" point should be done with great precision, and a tight tolerance on the 180 degree movement must be maintained. This tight tolerance on a mechanical indexing apparatus can be difficult to achieve in an MWD device, because of the harsh environment, and the need to provide vibration and shock dampening mounting of the sensitive parts. Elastic mounts are often required, with adequate room for deflection under dynamic loads, and mechanical stops may be damaged by continuous impacts.

Still referring to **Figure 2C,** there is provided a method of establishing the initial "zero" reference position to minimize the bias measurement errors, while allowing for a less precise mechanical indexing apparatus. Referring to **Figure 2C,** it is clear that the output of the gyroscope is less sensitive to angular positioning errors near the peak positive **(250)** and negative **(252)** portions of the sinusoidal wave **255**. The round points **254a** and **254b** plotted near the null value of the sine wave at **85** and **90** degrees have significantly more vertical displacement that the triangular points **250a** and **250b** plotted near the peak of the sine wave **255.** In an arrangement, the "zero" position is established near the positive or negative peaks. This can be accomplished by monitoring the output of the gyroscope while rotating. Finding the peak may be done by looking for the position where the slope of the output goes from rising to falling (or vice versa) with increasing angular position. The initial "zero" position measurements can be made at this position and saved for subsequent computation. The drive motor apparatus can then be commanded to make measurements at additional rotational positions relative to the initial position. Measuring at +180° provides the minimum value for the X-axis. Measuring at $\pm$ 90 ° provides the maximum and minimum values for the Y-axis. Applying equation (1) to these measurements determines biases for X and Y that are optimized to reduce errors related to indexing error.

Having determined the bias in the two axes by this downhole calibration technique, the outputs of the X and Y axes can then be corrected for this bias at any position on the angular (horizontal) scale. Angular parameters of interest for the downhole MWD assembly (Azimuth and Toolface) can then be computed using values at all 4 or at any of the previously recorded or subsequent indexed positions.

In summary, the triangular points plotted near the peaks of the sinusoids are used to compute the biases, and then after compensation, these measurements along with the measurements made at the round points plotted near the null values of the sinusoids are used to compute the angular parameters of interest.

Referring back to **Figure 2A**, in operation, to determine the toolface, inclination angle and the azimuth of the bottomhole assembly **90**, the drilling is interrupted or stopped. The gyroscope is powered and the earth rate measurements from the gyroscope **202** and gravity measurements from each of the accelerometers **204x-204z** are taken. As noted above the gyroscope rate measurements contain systematic biases or errors. To eliminate these systematic errors, a second set of rate measurements are made after rotating the gyroscopes **202** 180 degrees at the same wellbore depth and bottomhole assembly position and without switching off the power to the gyroscope **202**.

The measurements relating to each axis from the gyroscope made at each position are then differenced to determine the respective biases. The bias corresponding to each axis is preferably stored in a suitable memory in the processor for later use. The biases are used to correct the gyroscopic measurements prior to determining the azimuth or toolface with respect to the true north in the manners described above. These methods largely remove the systematic independent toolface errors. The remaining errors are removed by utilizing predetermined models derived from laboratory measurements made at the surface.

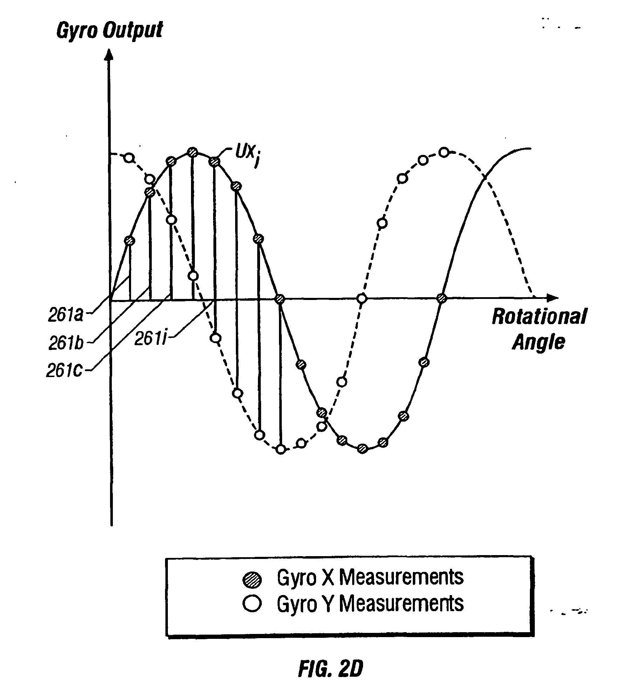

**Fig. 2D** illustrates another method of correcting for the gyro output. The tool is rotated successively through angles **261a, 261b,....** and at each rotational angle, the gyro output of the **X** and **Y** axis gyros is taken. Denoting by $Ux_i$ the measurement of the **X** gyro at an angle $\theta_i$, the measurements in the presence of random measurement errors $\varepsilon_i$. a bias $b_x$ may be represented as

$$Ux_i = A \sin\left(\theta_i + \phi\right) + b_x + \varepsilon_i \quad (3)$$

where $\phi$ is a phase angle and A is the amplitude of the sinusoid. This equation has three parameters to be estimated, namely A , $\phi$, and $b_x$. If measurements are made at three tool rotational angles, these parameters are uniquely determined. If additional measurements are made, then the equations are overdetermined and a solution may be obtained in a least squares sense using methods known in the art. The same procedure may also be used for the measurements made by the **Y** axis gyro. When both the **X** and Y axis gyro measurements are used, then there is an additional requirement that the phase term for the x and y directions differ by 90°. This too can be made part of the least squares minimization procedure.

Using a precision stepper motor to index the rotatable sensor housing has the advantage that a precise and arbitrary increment of rotation can be accomplished. No matter what the initial rotation angle (e.g. $\theta_i$ or **261$_i$** on **Fig. 2D**) is, the sensor can be rotated from this initial position in multiple predefined increments. By this method, it is easy to acquire, for example measurements at $\pm$30 ° and $\pm$ 60° from the initial position ($\theta_i$). Using small increments from the initial position minimizes the time required to index to these positions. It also minimizes the allowable rotational degree of freedom that must be designed into the wiring harness. The measured values and known associated phase angles are then used in conjunction with eq. (3) to solve for the best sinusoidal solution. The bias is then optimally determined as the **"b"** term of this equation.

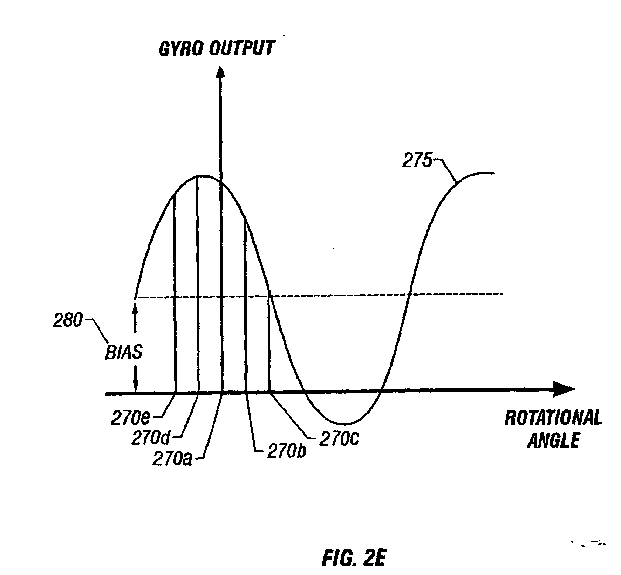

This procedure is illustrated in **Fig. 2E** wherein a more realistic case with a large bias **280** is indicated. In reality the bias may be several volts while the amplitude of the sinusoid is of the order of a few millivolts. The output **275** of one of the gyros is shown and starting from an initial arbitrary rotational position **270a,** measurements are taken at $\pm 30°$ **(270b, 270d)** and at $\pm 60$ ° **(270c, 270e)**.

The aborve-described bias removal methods in realtime downhole during the drilling of the wellbores, referred hereto as the "mechanical-indexing methods," for gyroscopes allow great flexibility of use, minimizing the survey time and power consumption. It allows the determination of the systematic bias errors that typically exist in commercially available gyroscopes, rather than relying on the stability of the bias for such gyroscopes. This further allows the use of gyroscopes that are otherwise unsuitable for use in gyrocompass mode in the MWD environment due to their poor stability or large turn-on to turn-on bias instability. The other term affecting the accuracy of gyroscopic measurement, namely the random walk, is minimized (a) by selecting gyroscopes with relatively low value of random walk by performing tests at the surface prior to their use in the bottomhole assembly and (b) averaging the measurements of the gyroscopes for sufficiently long time periods to remove the statistical variations of such errors.

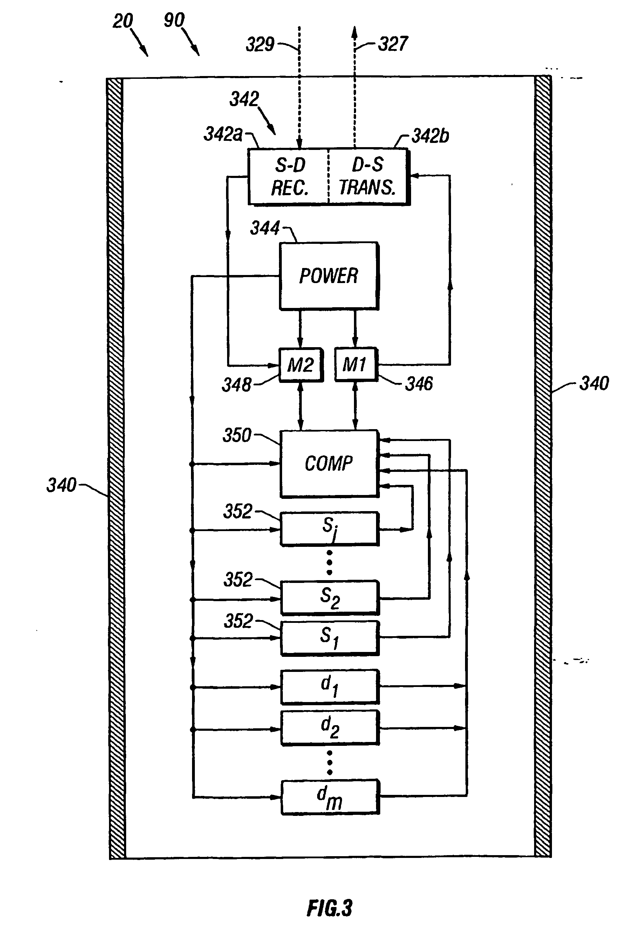

**Figure 3** shows a functional block diagram of the major elements of the bottom hole assembly **90** and further illustrates with arrows the paths of cooperation between such elements. It should be understood that **Figure 3** illustrates only one arrangement of the elements and one system for cooperation between such elements. Other equally effective arrangements may be utilized. A predetermined number of discrete data point outputs from the sensors **352** ($S_i$-$S_j$) are stored within a buffer which, in **Figure 3,** is included as a partitioned portion of the memory capacity of a computer **350**. The computer **350** preferably comprises commercially available solid state devices which are applicable to the borehole environment. Alternatively, the buffer storage means can comprise a separate memory element (not shown). The interactive models are stored within memory **348**. In addition, other reference data such calibration compensation models and predetermined drilling path also are stored in the memory **348**. A two way communication link exists between the memory **348** and the computer **350**. The responses from sensors **352** are transmitted to the computer **350** and or the surface computer **40** wherein they are transformed into parameters of interest using methods which will be detailed in a subsequent section hereof.

The computer **350** also is operatively coupled to certain downhole controllable devices **d1 - dm,** such as a thruster, adjustable stabilizers and kick-off subassembly for geosteering and to a flow control device for controlling the fluid flow through the drill motor for controlling the drill bit rotational speed.

The power sources **344** supply power to the telemetry element **342,** the computer **350,** the memory modules **346** and **348** and associated control circuits (not shown), and the sensors **352** and associated control circuits (not shown). Information from the surface is transmitted over the downlink telemetry path illustrated by the broken line **329** to the downhole receiving element of downhole telemetry unit **342,** and then transmitted to the storage device **348**. Data from the downhole components is transmitted uphole via link **327**. The parameters of interest such as toolface, inclination and azimuth are preferably computed downhole and only the answers are transmitted to the surface.

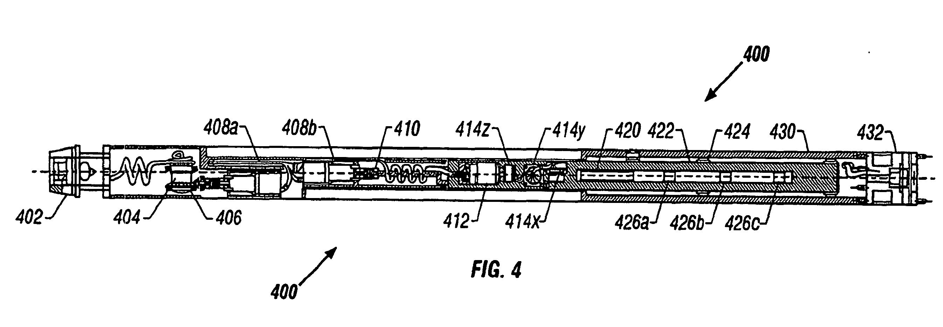

**Fig. 4** shows a sensor section **400** containing gyroscopes **404, 412 ,** a set of three accelerometers **414x, 414y** and **414z** disposed at a suitable location in the bottomhole assembly **90**. The gyroscopes **404, 412** are preferably two-axis gyroscopes. The sensor section also contains three three-axis magnetometers **426a, 426b,** and **416c**. The instruments are enclosed in a housing **430** with a downhole coupler **432** and an uphole coupler **402.** A stepper motor **408b** drives the sensors **404, 412, 414x, 414y, 414z, 426a, 426b,** and **426c** downhole of the stepper motor **408b** by a flex coupling **410** so that the sensors can be stepped through a series of azimuthal positions with respect to the tool axis. The magnetic sensors **426a, 426b,** and **426c** and the magnetometer board **420** are supported on a chassis **420** by non-magnetic bearings **424.** With this arrangement, as the gyroscope **412** is stepped through a number of angles to determined its bias, the magnetometers and the accelerometers are being stepped in unison with the gyroscope. Using methods described above with reference to the gyroscope, the bias in the accelerometers **414x** and **414y** and the magnetometers **426a, 426b,** and **426c** can be determined and subsequent survey measurements can be compensated for this bias.

In the absence of local magnetic perturbations, such as those caused by steel objects in the sensor assembly or in the proximity of the sensor assembly, there should be no z-gradient of the magnetic field, i.e., the long axis components of magnetic sensors **426a, 426b**, and **426c** should all have the same value. If the actual measurements do not satisfy this condition, then it is indicative of a local magnetic disturbance. The magnetic field disturbance caused by a magnetic object in the borehole or in the vicinity of the borehole follows the well known inverse square law, and by using known modeling techniques, the location and the strength of the disturbance can be ascertained from a plurality of magnetic measurements. This makes it possible to correct the magnetometer measurements for the disturbance and also determine an axial distance along the borehole where the z-gradient is substantially zero and the magnetic field substantially undisturbed.

Still referring to **Fig. 4,** the sensor assembly also includes a second gyroscope **404** driven by a second stepper motor **408a** through a bevel gear **406**. Using the methodology described above, the bias of this gyro can also be determined during logging operations, the difference being that in this case, it is the y- and z-components of the bias that are determined by rotating the gyro **412** through a number of different angles and making measurements at each angle.

Once the observations have been corrected for bias, the three sets of measurements based upon the three types of sensors can be used to obtain an improved estimate of the tool orientation. As discussed in United States Patent 5,432,699, the angular velocity $\Omega^g$ as measured by the gyroscopes is the sum of the angular velocity vector $\Omega^e$ of the earth and the angular velocity $\Omega^p$ of the tool relative to the earth

$$\dot{\Omega}^g = \Omega^e + \Omega^p \qquad (4).$$

The magnetometer and accelerometer measurements each give independent measurements of the motion of the tool relative to the earth. The equations denoted by (4) are overdetermined and may be solved to obtain an improved estimate of the actual orientation of the tool with respect to the earth using prior art methods. Since the magnetometer gives an orientation with respect to the earth's magnetic field, the method readily gives a measurement of the magnetic declination (angle between geographic and magnetic north).

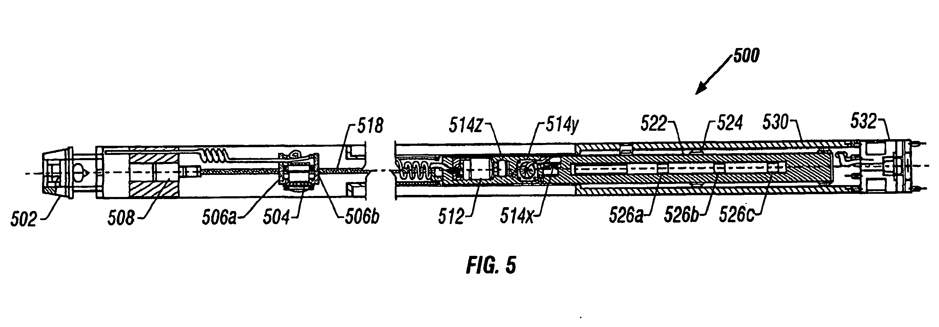

**Fig. 5** shows another sensor section **500** containing two gyroscopes **504, 512**, and a set of three accelerometers **514x, 514y** and **514z** disposed at a suitable location in the bottomhole assembly **90**. The gyroscopes **504, 512** are preferably two-axis gyroscopes. The sensor section also contains three three-axis magnetometers **526a, 526b,** and **526c**. The instruments are enclosed in a housing **530** with a downhole coupler **532** and an uphole coupler **502**. A stepper motor **508** drives the transverse gyroscope **504** through a bevel gear **506a,** the motion of the stepper motor being further transmitted through bevel gear **506b** to a shaft **518**. Sensors **512, 514x, 514y, 514z, 526a, 526b,** and **526c** are driven in synchronization with the gyroscopic sensor **504**. The magnetic sensors **526a, 526b,** and **526c** and the magnetometer board **520** are supported on a chassis **522** by non-magnetic bearings **524**. Using methods described above with reference to the gyroscope, the bias in the gyroscopes **504, 512,** the accelerometers **514x, 514y** and **514z** and the magnetometers **526a, 526b,** and **526c** can be determined and subsequent survey measurements can be compensated for this bias. The bias corrected measurements are then used to obtain an improved estimate of the tool position and orientation using the method discussed above with reference to **Fig. 4.**

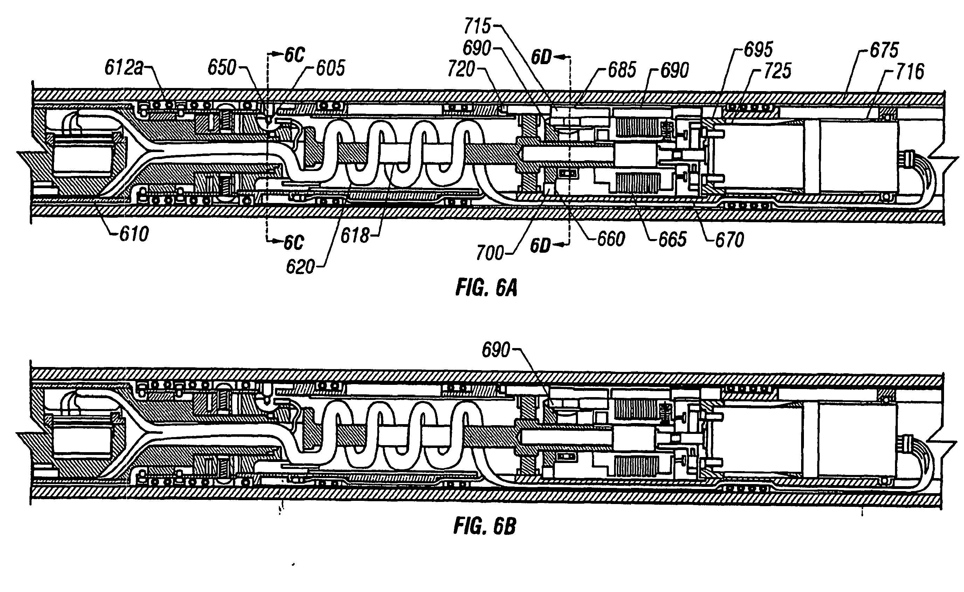

**Figure 6A** is a schematic diagram of an embodiment of the invention using a locking motor. Shown is a rotating instrument chassis **610** containing sensors as described above that rotates in fixed or non-rotating housing **614**. A reversible indexing drive motor **616**, coupled to the rotating instrument chassis **610** via a drive shaft **618** through a slip clutch **665**, can rotate the chassis **610** in the bottomhole assembly **90** about the z-axis, thus rotating the gyroscope **602** and accelerometers **604x-604z** from one mechanical position to another mechanical position by any desired rotational angle. A stepper motor is preferred as the reversible indexing drive motor **616** because stepper motors are precision devices and can provide positive feedback about the amount of rotation. Any other mechanism, whether electrically-operated, hydraulically-operated or by any other desired manner, may be utilized to rotate the gyroscopes within the bottomhole assembly **90**. The drive motor **616** may be directly coupled with the slip clutch **665** or may be coupled through a suitable gear box **625** to the slip clutch **665**.

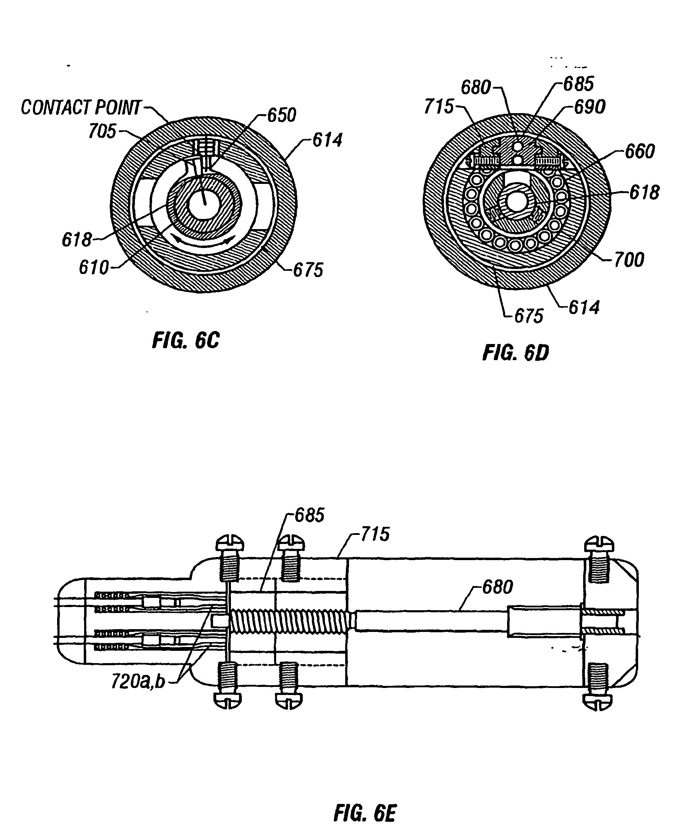

A spur gear **670** is fixedly mounted on the motor shaft **695**. A lead screw **680** is mounted in a slot in the motor chassis **675** and is offset from, and essentially parallel to, the rotational axis of the drive shaft **618**. The lead screw **680** has a gear profile on one end so as to properly mesh radially with the spur gear **670**. The lead screw **680** has a thread profile on the other end adapted to engage with a trolley **685**, which is driven axially thereon by rotation of the lead screw **680**. A locking pin **690** is mounted on the trolley **685**. The trolley **685** is constrained to slide within a trolley guide **715** , as shown in **Figure 6D** and **Figure 6E**. When the motor shaft **695** rotates, the spur gear **670**, rotating with the motor shaft **695**, engages the lead screw 680 and causes the lead screw **680** to rotate. As the lead screw **680** rotates, it meshes with the trolley **685** and drives the trolley **685** through the action of the lead thread cut into the lead screw **680** and the trolley **685**. The direction of rotation of the reversible motor **616** thereby determines the direction of axial movement of the trolley **685** and the locking pin **690** thereon. A locking disk **660** is mounted on the drive shaft **618** and has at least one locking hole **700** drilled circumferentially into the locking disk 660. The locking disk **660** is axially located on the shaft **618** in a position to fully seat the locking pin **690** when the trolley **685** is in the locked position as shown on **Figure 6A**. Two spring-energized electrical contact pins **720a** and **720b** are mounted on the trolley guide **715** so as to contact the trolley **685** when the trolley **685** is in the locked position. When the trolley **685** and the pins **720a** and **720b** make contact, an electrical circuit is formed.

In the preferred embodiment, the instrument chassis **610** is typically rotated between 0-360 angular degrees, the rotation being limited by the windup in the electrical wires to the sensors. To prevent over-rotation, a rotational stop-pin **650** is mounted in the motor chassis **675** and engages a notched shoulder **705** on the drive shaft **618** at the rotational limit, shown in **Figure 6A** and **Figure 6C.** Both the stop-pin **650** and the notched shoulder **705** are wired to close an electrical circuit on contact with each other.

The operation of the motor is best understood by starting in the locked position as shown in **Figure 6A.** The drive motor **616** is rotated in a direction so as to slide the trolley **685** towards the right or unlocked position. While the locking pin **690** is still engaged in a locking hole **700,** the drive shaft **618** is constrained from rotating and is slipped with respect to the motor shaft **695** through the slip clutch **665.** The torque of the slip clutch **665** forces the edge of the locking hole **700** to press against the locking pin **690** as the locking pin **690** is being withdrawn from the locking hole **700.** Therefore, the locking pin **690** has minimal angular clearance from the wall of the locking hole **700** at disengagement. As shown in **Figure 6B,** when the locking pin **690** clears the locking hole **700** the drive shaft **618** begins to rotate the instrument chassis **610** to predetermined positions for sensor measurements.

At the end of the measurement sequence, it is desirable to return the instrument chassis **610** to the same angular orientation it had before the start of the measurement sequence. If the trolley **685** and locking pin **690** are driven back toward the locked position, the locking pin **690** will arrive at the edge of the locking hole **700,** where it last separated contact with the locking disk **660.** However, due to gear backlash and an accumulation of manufacturing tolerances, it is possible that a mis-alignment of the locking pin **690** and the locking hole **700** may occur and the locking pin **690** will not hit the locking hole **3700** but will instead contact the face of the locking disk **660.** The following technique is used to eliminate this interference problem.

At the beginning or end of the measurement sequence described above, the motor **616** is driven in the unlocking direction slightly beyond the point where the notched shoulder **705** on the drive shaft **618** contacts the rotational stop-pin **650.** This intentionally slips the slip clutch **665** sufficiently to back the trolley **685** and the locking pin **690** away from the locking disk **660** an amount at least equal to the angular displacement of one-half of the diameter of the locking hole **700.** Therefore, when the trolley **685** is driven toward the locking disk **660;** the notched shoulder **705** contacts the stop-pin **650** from the opposite angular direction stopping rotation of the drive shaft **618** and of the locking disk **660.** The slip clutch 665 begins to slip and the trolley **685,** with the locking pin **690,** is driven forward such that the locking pin **690** engages the center of the locking hole **700.**

In an alternate embodiment, where rotations of greater than 360 degrees are required, there is no positive rotational stop. The plurality of locking holes **700** are spaced sufficiently close to one another such that the locking pin **690** will automatically stab into one of the locking holes **700** while at virtually any rotational position. The stepper motor **616** is actuated a known number of steps, in the locking direction, which should result in the locking pin **690** becoming fully seated in a locking hole **700.** When the locking pin **690** is fully seated, the contact pins **720a-b** contact the trolley **685** and close an electrical circuit signaling the motor controller to cease actuation of the stepper motor **616.** If the motor controller does not sense the circuit closure by the time the stepper motor **616** has actuated the known number of steps, the motor controller will reverse the motor **616** , driving the locking pin **690** to a fully open position and reinitiate the locking sequence until a successful lock is indicated by a circuit closure.

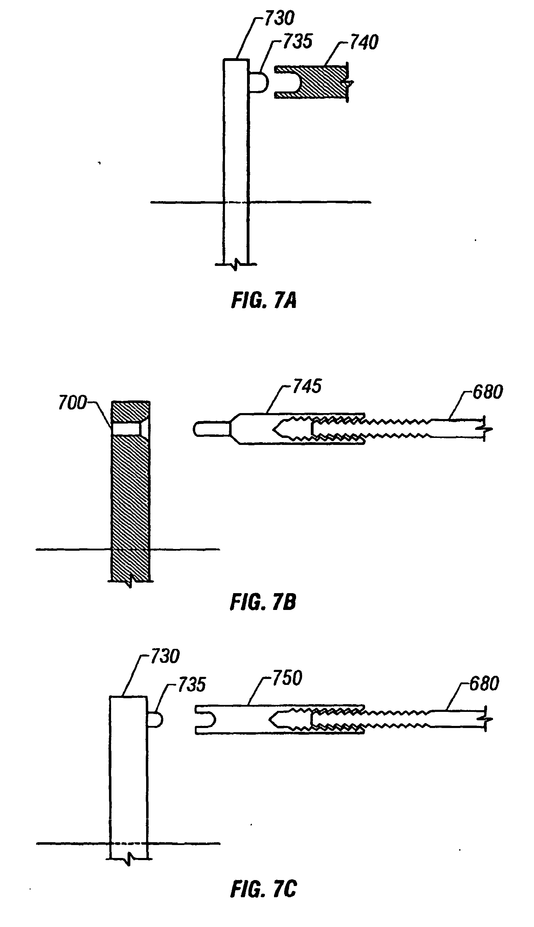

Figures **7A-7D** show alternate embodiments for rotationally locking the shaft **618.** **Figure 7A** shows a locking disk **730** with a plurality of pins **735** protruding from the surface. These pins are mounted in a circumferential pattern on the disk **730** and are adapted to fit inside of locking pin **740** mounted on the trolley **685.** The locking pin **740** has a hollow end adapted to closely fit over the pins **735** protruding from the locking disk **730.** Other aspects of the locking and unlocking operation are as described above.

**Figure 7B** shows a telescoping locking pin **745** internally threaded on one end and driven by the lead screw **680.** The non-threaded end of the pin **745** is adapted to stab into any of the locking holes **700** on the locking disk **660.**

**Figure 7C** shows a telescoping locking pin **750** internally threaded on one end and driven by the lead screw **680.** The non-threaded end of the pin **745** is adapted to fit over any of the locking pins **735** on the locking disk **730.**

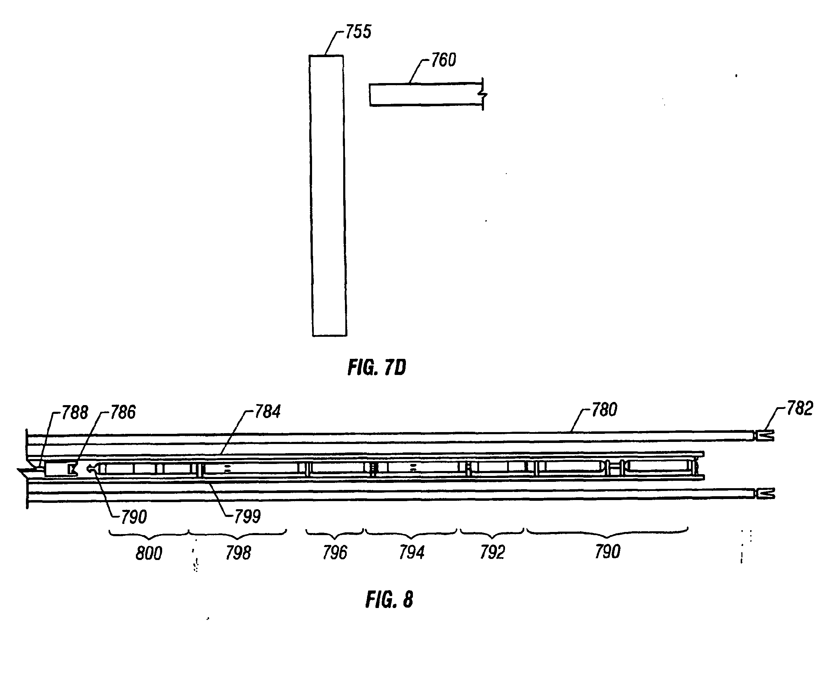

**Figure 7D** shows a locking pin **760** adapted to frictionally interface with the locking disk **755** with sufficient axial force so as to generate a sufficient frictional force between the pin **760** and the disk **755** to prevent rotation of the disk **755.**

The indexing procedure may slightly modified by making a first measurement at an arbitrary orientation of the housing. Subsequent measurements are made at $\pm$ 30° and $\pm$ 60°

In one mode of operation of the tool, drilling is temporarily suspended and by using the indexing procedure discussed above, the bias in the instruments is determined and used to correct the measurements. From the corrected measurements, the BHA position and orientation is determined. By use of the locking arrangement, the chassis **210** is locked in place and drilling is resumed. During the drilling process, measurements continue to be made with the gyro, accelerometer and/or magnetometer and periodic updates of the BHA position and orientation are made using the determined bias. At the next suspension of drilling the indexing procedure is repeated and new biases in the gyro, accelerometer and magnetometers determined.

When used in conjunction with a BHA including a mud motor, the disclosed tools may be used to steer the drilling direction. The gyro-MWD device is mounted on a non-rotating part of the BHA (not shown) and drilling is continued using the mud motor. The gyro-MWD device is used to determine orientation and azimuth of the borehole and the BHA and this information is used to control the direction of drilling.

U.S. Patent 5,845,722 to *Makohl et al* and U.S. patent Application Ser. No. 09/206,969 disclose a drilling liner system for use in drilling through formations in which the pressure is significantly different from the pressure in the adjaceat formations, and/or unstable formations make it difficult to protect the formation with a liner or casing in the hole. The drilling liner system comprises an inner string carrying an inner assembly having a pilot bit, and an outer assembly having a core bit. The gyro-MWD tool may be conveyed on a retrievable assembly mounted in the drilling liner.

Referring now to **Fig. 8,** a drillbit **782** at the end of a drilling liner **780** ia shown. Inside the drilling liner **780** is an adapter tube for supporting the sensor assembly. The sensor assembly includes the Gyro-MWD sensors **790** as discussed above, the Gamma ray sensor **792,** the Digital Attitude Sensor (DAS) assembly **794,** the memory assembly **796,** the battery assembly **798** and the pulser **800**. To keep the illustration simple, supports for the adapter tube and the sensor units are not indicated. The sensor assembly may be retrieved using a wireline **788** and a fishing assembly **786-790**.

The operation of the device shown in **Fig. 8** is similar to that described above. The retrievable module is conveyed within the drilling liner and measurements are made as drilling progresses, with drilling being suspended at a first depth where the indexing operation is carried out Once the borehole inclination and azimuth are determined as discussed above, drilling is resumed with the Gyro-MWD sensor assembly locked in place and additional measurements may be made with the sensors thereon while drilling is resumed. Drilling may be suspended at other depths and the process is repeated.

Once drilling has reached the desired depth with the drilling liner, the sensor assembly is retrieved while the adapter tube and the liner are left in place. Subsequent re-entry of the borehole with a smaller drill bit or drilling liner would require drilling out the adapter tube. For this reason, the adapter tube is preferably made of a composite material that is easy to drill through. Alternatively, the adapter may be a short tube having a length that extends only to a position such as **799** so that the amount of material to be drilled out during re-entry is smaller.

The sensors shown in addition to the Gyro-MWD sensors are for illustrative purposes only and not intended to be a limitation of the present invention.

The gyro-MWD tool as described above may be used for making measurements-while-tripping (MWT). To do this, at the time that a drill string is to be pulled on a trip to replace the drill bit, the measuring instrument is used to make measurements as the drillstring is being pulled up. Typically, the drill string **20** is made up of 30-ft. (9.14 m) sections of drillpipe and the surface assembly **10** is capable pulling up three sections of drillpipe (called a "stand"). Tripping thus requires that the drilling assembly downhole stays at a fixed depth while the stand is being removed. The indexing procedure described above is performed at one or more of these stationary positions during tripping. The results is a substantially uniformly spaced (in borehole depth, not necessarily true vertical depth) measurements that are used to give the wellbore inclination and azimuth. When combined with the known borehole depth (from the number of drillpipe segments being retrieved), a survey of the borehole may be obtained are discrete locations.

Those versed in the art would recognize that during tripping operations, circulation of mud is discontinued. Hence unless circulation is specifically resumed, the measurements made during tripping have to be stored in memory on the downhole tool for subsequent retrieval

A particular advantage of making MWT is that the shallower portions of the borehole would be surveyed more times than the deeper portions of the borehole since the shallower portions would be tripped more times. The obtaining of multiple sets of data over the shallower section gives an improved statistical accuracy of the borehole inclination and azimuth, giving an improved survey at discrete locations.

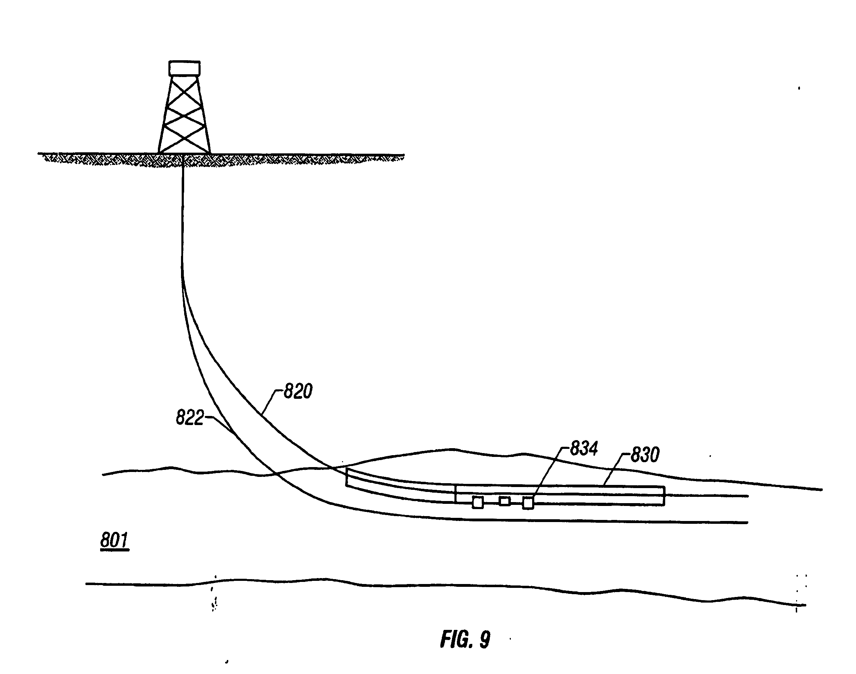

**Fig. 9** illustrates an arrangement in secondary recovery operations. A producing wellbore **820** has been drilled into a reservoir interval **801** that contains hydrocarbons. For various reasons, such as low formation pressure or high viscosity of the hydrocarbons in the reservoir, production under natural conditions of hydrocarbons may be at uneconomically low rates. In such cases, a second wellbore **822** is drilled, typically as a sidebore from the wellbore **820** so as to be substantially parallel to the main wellbore within the reservoir. The producing wellbore is typically cased with casing **830** that has perforations **834.** Fluid, such as water, $CO_2$ or steam is then injected into the formation through the secondary wellbore **822** and the injected fluid drives the hydrocarbons in the formation towards the producing wellbore **820** where it may be recovered. Such an operation requires careful positioning of the secondary borehole **822** in proximity to the production wellbore **820.** It is also important to maintain the secondary borehole in the same azimuth as the production wellbore. Due to the fact that the production wellbore is cased, conventional magnetic techniques cannot be used to determine the inclination and azimuth of the secondary wellbore. Accordingly the position of the production wellbore may be stored in a suitable memory and the information from the Gyro-MWD tool is used to control the direction of drilling of the secondary wellbore.

While the foregoing disclosure is directed to the preferred embodiments of the invention, various modifications will be apparent to those skilled in the art. It is intended that all variations within the scope of the appended claims be embraced by the foregoing disclosure.

**Claims**

1. A device for rotatably positioning and locking a drive shaft in a measurement-while-drilling (MWD) downhole assembly at one of a plurality of angular positions comprising:

   a single reversible motor (616) driving said drive shaft (618) through a slip clutch (665);
   a lead screw (680) adapted to rotate when said motor (616) is operated; and,
   a locking mechanism actuated by said lead screw (680), said locking mechanism having a locked position wherein it engages said drive shaft (618) and an unlocked position wherein it is operatively disengaged from said drive shaft (618).

2. A device as claimed in claim 1, wherein the drive shaft (618) has an annularly notched shoulder (705) on an end distal from the slip clutch (665), said shoulder (705) adapted to engage a rotationally stop pin (650), thereby limiting drive shaft (618) rotation to less than 360 degrees.

3. A device as claimed in claim 2, wherein said stop pin (650) and said shoulder (705) are adapted to form an electrical circuit on contact with each other.

4. A device as claimed in any preceding claim, wherein a spur gear (670) is fixedly attached to a motor drive shaft (695) and operatively engaged with said lead screw (680), said spur gear (670) adapted to rotate when said motor (616) is operated.

5. A device as claimed in claim 4, wherein a locking disk (660) is fixedly mounted on the drive shaft (618), said disk (660) containing a plurality of locking holes (700) located circumferentially disposed about a center of the disk (660).

6. A device as claimed in claim 5, wherein the locking mechanism further comprises:

   a trolley (685) engaged with and slidably mounted on said lead screw (680); and
   a locking pin (690) mounted on the trolley (685), said locking pin (690) adapted to engage any of the plurality of locking holes (700) on the locking disk (660).

7. A device as claimed in claim 6, further comprising a pair of electrical contacts (720a,720b) adapted to make contact with the locking pin trolley (685) when the locking pin (690) is fully mated with the locking disk (660), said contacts (720a,720b) and said locking pin trolley (685) thereby completing an electrical circuit indicating that the locking pin (690) is corrected seated.

8. A device as claimed in claim 5, wherein the locking mechanism further comprises a locking pin (745), hollow on one end, said hollow end threadably adapted to engage the lead screw (680) and to slide over the lead screw (680) in a telescoping manner when the lead screw (680) is rotated, the end distal from the hollow end adapted to engage any of the plurality of locking holes (700) on the locking disk (660).

9. A device as claimed in claim 4, wherein a locking disk (730) is fixedly mounted on the drive shaft (618), said disk (730) containing a plurality of locking pins (735) located circumferentially disposed about a center of the disk (730).

10. A device as claimed in claim 9, wherein the locking mechanism further comprises a trolley (750) engaged with and slidably mounted on said lead screw (680), said trolley (750) having a recess adapted to engage any of the plurality of locking pins (735) on the locking disk.

11. A device as claimed in claim 10, further comprising a pair of electrical contacts adapted to make contact with the locking pin trolley (750) when the locking pin (735) is fully mated with the locking disk (730), said contacts and said locking pin trolley (750) thereby completing an electrical circuit indicating that the locking pin (735) is correctly seated.

12. A device as claimed in claim 9, wherein the locking mechanism further comprises a locking pin (735), hollow on one end, said hollow end threadably adapted to engage the lead screw (680) and to slide over the lead screw (680) in a telescoping manner when the lead screw (680) is rotated, the end distal from the hollow end adapted to engage any of the plurality of locking pins (735) on the locking disk (730).

13. A device as claimed in claim 5, wherein a locking disk (730) is fixedly mounted on the drive shaft (618), said disk

EP 1 431 510 B1

(730) containing a plurality of locking pins (735) located circumferentially disposed about a center of the disk (730).

14. A device as claimed in claim 13, wherein the locking mechanism further comprises a trolley engaged with and slidably mounted on said lead screw, said trolley adapted to engage a friction face of the locking disk.

15. A device as claimed in claim 13, wherein the locking mechanism further comprises:

a locking pin (760) mounted on the trolley, said locking pin (760) adapted to engage the friction face of the locking disk.

16. A device as claimed in any preceding claim, wherein said motor (616) is a reversible stepper motor.

**Patentansprüche**

1. Vorrichtung zum drehbaren Positionieren und Verriegeln einer Antriebswelle in einer Bohrlochanordnung zum Messen während des Bohrens (MWD-Bohrlochanordnung) an einer von einer Mehrzahl von Winkelpositionen mit:

einem einzigen umkehrbaren Motor (616), der die Antriebswelle (618) über eine Rutschkupplung (665) antreibt, einer Verstellschraubenspindel (680), die so beschaffen ist, dass sie sich dreht, wenn der Motor (616) betätigt wird, und einem durch die Verstellschraubenspindel (680) betätigten Verriegelungsmechanismus, der eine verriegelte Position aufweist, in der er mit der Antriebswelle (618) in Eingriff ist, und eine entriegelte Position aufweist, in der er von der Antriebswelle (618) funktional getrennt ist.

2. Vorrichtung nach Anspruch 1, in der die Antriebswelle (618) eine ringförmige eingekerbte Schulter (705) an einem distalen Ende der Rutschkupplung (665) aufweist, wobei die Schulter (705) dazu ausgelegt ist, mit einem Drehanschlagstift (650) einzugreifen und **dadurch** die Drehung der Antriebswelle (618) auf weniger als 360° zu beschränken.

3. Vorrichtung nach Anspruch 2, in der der Drehanschlagstift (650) und die Schulter (705) dazu ausgelegt sind, bei einem gegenseitigen Kontakt einen elektrischen Stromkreis zu bilden.

4. Vorrichtung nach einem der voranstehenden Ansprüche, in der ein Stirnradgetriebe (670) fest an einer Motorwelle (695) angebracht und funktional mit der Verstellschraubenspindel (680) eingreift, wobei das Stirnradgetriebe (670) dazu ausgelegt ist, zu rotieren, wenn der Motor (616) in Betrieb ist.

5. Vorrichtung nach Anspruch 4, in der eine Verriegelungsscheibe (660) fest an der Antriebswelle (618) angebracht ist, wobei die Scheibe (660) eine Mehrzahl von Verriegelungslöchern (700) umfasst, die in Umfangsrichtung um eine Mitte der Scheibe (660) verteilt angeordnet sind.

6. Vorrichtung nach Anspruch 5, wobei der Verriegelungsmechanismus des weiteren folgendes umfasst:

ein Wälzlager (685), das in Eingriff mit der Verstellschraubenspindel (680) ist und gleitend auf dieser angeordnet ist, und einen Verriegelungsstift ((690), der auf dem Wälzlager (685) angeordnet ist und dazu ausgelegt ist, mit einem beliebigen der Mehrzahl von Verriegelungslöchern (700) auf der Verriegelungsscheibe (660) in Eingriff zu gelangen.

7. Vorrichtung nach Anspruch 6, die des weiteren ein Paar von elektrischen Kontakten (720a, 720b) umfasst, die dazu ausgelegt sind, das Verriegelungsstiftwälzlager (685) zu berühren, wenn der Verriegelungsstift (690) vollständig mit der Verriegelungsscheibe (660) ineinandergreift, wobei die Kontakte (720a, 720b) und das Verriegelungsstiftwälzlager (685) **dadurch** einen elektrischen Stromkreis bilden, der anzeigt, dass der Verriegelungsstift (690) einen korrekten Sitz hat.

8. Vorrichtung nach Anspruch 5, in der der Verriegelungsmechanismus des weiteren einen an einem Ende hohlen Verriegelungsstift (745) umfasst, wobei das hohle Ende mit einem Innengewinde dazu ausgebildet ist, mit der Verstellschraubenspindel (680) einzugreifen und in einer teleskopartigen Weise über die Verstellschraubenspindel

13

zu gleiten, wenn die Verstellschraubenspindel (680) gedreht wird, wobei das zu dem hohlen Ende distale Ende dazu ausgebildet ist, mit einem beliebigen der Mehrzahl von Verriegelungslöchern auf der Verriegelungsscheibe (760) in Eingriff zu gelangen.

9. Vorrichtung nach Anspruch 4, in der eine Verriegelungsscheibe (730) fest auf der Antriebswelle (618) angeordnet ist, wobei die Scheibe (730) eine Mehrzahl von Verriegelungsstiften (735) aufweist, die in Umfangsrichtung um eine Mitte der Scheibe (730) verteilt angeordnet sind.

10. Vorrichtung nach Anspruch 9, in der der Verriegelungsmechanismus des weiteren ein Wälzlager (750) umfasst, das in Eingriff mit der Verstellschraubenspindel (680) ist und gleitend auf dieser angeordnet ist, wobei das Wälzlager (750) eine Vertiefung bzw. Ausnehmung aufweist, die dazu ausgelegt ist, mit einem beliebigen der Mehrzahl von Verriegelungsstiften (735) auf der Verriegelungsscheibe in Eingriff zu gelangen.

11. Vorrichtung nach Anspruch 10, die des weiteren ein Paar von elektrischen Kontakten umfasst, die dazu ausgelegt sind, das Verriegelungsstiftwälzlager (750) zu berühren, wenn der Verriegelungsstift (735) vollständig mit der Verriegelungsscheibe (730) ineinandergreift, wobei die Kontakte und das Verriegelungsstiftwälzlager (750) **dadurch** einen elektrischen Stromkreis schließen, der anzeigt, dass der Verriegelungsstift (735) einen korrekten Sitz hat.

12. Vorrichtung nach Anspruch 9, in der der Verriegelungsmechanismus des weiteren einen an einem Ende hohlen Verriegelungsstift (735) umfasst, wobei das hohle Ende mit einem Innengewinde dazu ausgebildet ist, mit der Verstellschraubenspindel (680) einzugreifen und in einer teleskopartigen Weise über die Verstellschraubenspindel zu gleiten, wenn die Verstellschraubenspindel (680) gedreht wird, wobei das zu dem hohlen Ende distale Ende dazu ausgebildet ist, mit einem beliebigen der Mehrzahl von Verriegelungsstiften (735) auf der Verriegelungsscheibe (730) in Eingriff zu gelangen.

13. Vorrichtung nach Anspruch 5, in der eine Verriegelungsscheibe (730) fest auf der Antriebswelle (618) angeordnet ist, wobei die Scheibe (730) eine Mehrzahl von Verriegelungsstiften (735) aufweist, die in Umfangsrichtung um eine Mitte der Scheibe (730) verteilt angeordnet sind.

14. Vorrichtung nach Anspruch 13, in der der Verriegelungsmechanismus des weiteren ein Wälzlager umfasst, das in Eingriff mit der Verstellschraubenspindel ist und auf dieser gleitend angeordnet ist, wobei das Wälzlager dazu ausgelegt ist, mit einer Reibfläche auf der Verriegelungsscheibe in Eingriff zu gelangen.

15. Vorrichtung nach Anspruch 13, in der der Verriegelungsmechanismus des weiteren folgendes umfasst:

einen Verriegelungsstift (760), der auf dem Wälzlager angeordnet ist und dazu ausgelegt ist, mit der Reibfläche der Verriegelungsscheibe in Eingriff zu gelangen.

16. Vorrichtung nach einem der voranstehenden Ansprüche, in der der Motor (616) ein umkehrbarer Schrittmotor ist.

**Revendications**

1. Dispositif pour positionner avec faculté de rotation et verrouiller un arbre d'entraînement dans une installation de fond de mesure en cours de forage (MWD) à l'une d'une pluralité de positions angulaires comprenant :

un moteur réversible unique (616) entraînant ledit arbre d'entraînement (618) par l'intermédiaire d'un limitateur de couple à friction (665) ;
une vis-mère (680) adaptée pour tourner lorsque ledit moteur (616) est actionné ; et
un mécanisme de blocage actionné par ladite vis-mère (680), ledit mécanisme de blocage ayant une position bloquée dans laquelle il engage ledit arbre d'entraînement (618) et une position débloquée dans laquelle il est désengagé de manière opérationnelle dudit arbre d'entraînement (618).

2. Dispositif selon la revendication 1, dans lequel l'arbre d'entraînement (618) a un épaulement (705) à encoche annulaire sur une extrémité distale dudit limitateur de couple à friction (665), ledit épaulement (705) étant adapté pour engager une goupille d'arrêt rotationnel (650), limitant ainsi la rotation de l'arbre d'entraînement (618) à moins de 360 degrés.

**3.** Dispositif selon la revendication 2, dans lequel ladite goupille d'arrêt (650) et ledit épaulement (705) sont adaptés pour former un circuit électrique au contact l'un de l'autre.

**4.** Dispositif selon l'une quelconque des revendications précédentes, dans lequel un engrenage cylindrique (670) est attaché de manière fixe à un arbre d'entraînement de moteur (695) et engagé de manière opérationnelle avec ladite vis-mère (680), ledit engrenage cylindrique (670) étant adapté pour tourner lorsque ledit moteur (616) est actionné.

**5.** Dispositif selon la revendication 4, dans lequel un disque de blocage (660) est monté de manière fixe sur l'arbre d'entraînement (618), ledit disque (660) contenant une pluralité de trous de blocage (700) disposés circonférentiellement autour d'un centre du disque (660).

**6.** Dispositif selon la revendication 5, dans lequel le mécanisme de blocage comprend en outre :

un chariot (685) engagé avec et monté de manière coulissante sur ladite vis-mère (680) ; et
une goupille de blocage (690) montée sur le chariot (685), ladite goupille de blocage (690) étant adaptée pour engager l'un quelconque de la pluralité de trous de blocage (700) sur le disque de blocage (660).

**7.** Dispositif selon la revendication 6, comprenant en outre une paire de contacts électriques (720a, 720b) adaptés pour effectuer un contact avec le chariot (685) de goupille de blocage lorsque la goupille de blocage (690) est pleinement couplée au disque de blocage (660), lesdits contacts (720a, 720b) et ledit chariot (685) de goupille de blocage complétant ainsi un circuit électrique indiquant que la goupille de blocage (690) est correctement assise.

**8.** Dispositif selon la revendication 5, dans lequel le mécanisme de blocage comprend en outre une goupille de blocage (745), creuse sur une extrémité, ladite extrémité creuse étant adaptée par filetage pour engager la vis-mère (680) et pour coulisser sur la vis-mère (680) de manière télescopique lorsque la vis-mère (680) est mise en rotation, l'extrémité distale de l'extrémité creuse est adaptée pour engager l'un quelconque de la pluralité des trous de blocage (700) sur le disque de blocage (660).

**9.** Dispositif selon la revendication 4, dans lequel un disque de blocage (730) est monté de manière fixe sur l'arbre d'entraînement (618), ledit disque (730) comprenant une pluralité de goupilles de blocage (735) disposées circonférentiellement autour d'un centre du disque (730).

**10.** Dispositif selon la revendication 9, dans lequel le mécanisme de blocage comprend en outre un chariot (750) engagé avec et monté avec faculté de coulissement sur ladite vis-mère (680), ledit chariot (750) ayant un évidement adapté pour engager l'un quelconque de la pluralité des goupilles de blocage (735) sur le disque de blocage.

**11.** Dispositif selon la revendication 10, comprenant en outre une paire de contacts électriques adaptés pour effectuer un contact avec le chariot (750) de goupille de blocage lorsque la goupille de blocage (735) est pleinement couplée au disque de blocage (730), lesdits contacts et ledit chariot (750) de goupille de blocage, complétant ainsi un circuit électrique indiquant que la goupille de blocage (735) est correctement assise.

**12.** Dispositif selon la revendication 9, dans lequel le mécanisme de blocage comprend en outre une goupille de blocage (735), creuse sur une extrémité, ladite extrémité creuse étant adaptée par filetage pour engager la vis-mère (680) et pour coulisser sur la vis-mère (680) de manière télescopique lorsque la vis-mère (680) est mise en rotation, l'extrémité distale de l'extrémité creuse étant adaptée pour engager l'une quelconque de la pluralité des goupilles de blocage (735) sur le disque de blocage (730).

**13.** Dispositif selon la revendication 5, dans lequel un disque de blocage (730) est monté de manière fixe sur l'arbre d'entraînement (618), ledit disque (730) contenant une pluralité de goupilles de blocage (735) disposées circonférentiellement autour d'une centre du disque (730).

**14.** Dispositif selon la revendication 13, dans lequel le mécanisme de blocage comprend en outre un chariot engagé avec et monté avec faculté de coulissement sur ladite vis-mère, ledit chariot étant adapté pour engager une face de frottement du disque de blocage.

**15.** Dispositif selon la revendication 13, dans lequel le mécanisme de blocage comprend en outre :

une goupille de blocage (760) montée sur le chariot, ladite goupille de blocage (760) étant adaptée pour engager la face de frottement du
disque de blocage.

16. Dispositif selon l'une quelconque des revendications précédentes, dans lequel ledit moteur (616) est un moteur pas à pas réversible.

**FIG. 1**

*FIG. 2A*

*FIG. 2B*

EP 1 431 510 B1

FIG. 2C

**FIG. 2D**

FIG. 2E

**FIG.3**

FIG. 4

FIG. 5

FIG. 6A

FIG. 6B

CONTACT POINT

705

650

614

618

610

675

**FIG. 6C**

680    685

715    690

660

618

700

675    614

**FIG. 6D**

685    715

680

720a,b

**FIG. 6E**

*730*

*735* *740*

**FIG. 7A**

*700* *745* *680*

**FIG. 7B**

*730*

*735* *750* *680*

**FIG. 7C**

EP 1 431 510 B1

755

760

**FIG. 7D**

788  786  784  780  782

790  799

800  798  796  794  792  790

**FIG. 8**

EP 1 431 510 B1

820

822

834 830

801

**FIG. 9**